# EUROPEAN PATENT APPLICATION

(11) **EP 4 764 316 A1**
(43) Date of publication of application: **24.06.2026**
(21) Application number: 24874886.5
(22) Date of filing: 23.09.2024
(51) Int. Cl.: F24C 15/00, F24C 7/08, H05B 1/02, H05B 6/06, H05B 6/12, G06F 3/16, G06F 3/14

(54) **COOKING APPARATUS AND METHOD FOR CONTROLLING COOKING APPARATUS**

(30) Priority: 04.10.2023 KR 20230131982; 26.01.2024 KR 20240012548
(71) Applicant: Samsung Electronics Co., Ltd., Suwon-si, Gyeonggi-do 16677 (KR)
(72) Inventor: HAN, Najeong, Suwon-si, Gyeonggi-do 16677 (KR)
(74) Representative: Appleyard Lees IP LLP
(86) International application number: PCT/KR2024/014290
(87) International publication number: WO 2025/075328

(57) **Abstract**

A cooking apparatus includes: a first cooking device; a second cooking device; a display configured to display a control screen including a first interface associated with the first cooking device and a second interface associated with the second cooking device; and a controller configured to change at least one of a layout of the control screen or content of the first interface and the second interface based on use history data of the first cooking device and the second cooking device.

## Description

### [Technical Field]

The disclosure relates to a cooking apparatus including a plurality of cooking devices, and a method for controlling the cooking apparatus.

### [Background Art]

A cooking device is an appliance for heating and cooking an object to be cooked, such as food, and refers to a device capable of providing various functions related to cooking, such as heating, thawing, drying, and sterilizing the object to be cooked.

The cooking device may include a cooktop, or the like, that uses electricity or gas to heat a cooking container containing food.

A gas cooktop, which is a cooktop that uses gas, such as a gas range, cooks food with heat by turning a lever to ignite the gas at a small burner.

An electric cooktop using electricity includes an induction or a highlight cooktop. The induction is a device that uses electricity to generate a magnetic field in an internal coil, induces an eddy current in a cooking container by the law of electromagnetic induction, and generates heat to cook food with the heat. The highlight is a device that heats an internal heating wire using electricity and cooks food using heat generated from the heating wire.

In addition, examples of the cooking device include an oven, such as a gas oven or an electric oven, a microwave heating device (hereinafter, referred to as a microwave), an over the range (OTR), a gas grill, or an electric grill.

Recently, a cooking apparatus including a plurality of cooking devices is being developed according to user needs, and improvement of user experience for easily controlling the plurality of cooking devices is required.

### [Disclosure]

### [Technical Problem]

The disclosure provides a cooking apparatus that may provide user experience enabling easy control of a plurality of cooking devices, and a method for controlling the cooking apparatus.

The disclosure provides a cooking apparatus that may enhance user experience by changing the layout of a control screen according to user needs, and a method for controlling the cooking apparatus.

The disclosure provides a cooking apparatus that may enhance user experience by changing interface content according to user needs, and a method for controlling the cooking apparatus.

The disclosure provides a cooking apparatus that may enhance user experience through automatic screen switching according to user needs, and a method for controlling the cooking apparatus.

Technical aspects that can be achieved by the disclosure are not limited to the above-mentioned aspects, and other technical aspects not mentioned will be clearly understood by one of ordinary skill in the technical art to which the disclosure belongs from the following description.

### [Technical Solution]

According to an embodiment, a cooking apparatus may include: a first cooking device; a second cooking device; a display configured to display a control screen including a first interface associated with the first cooking device and a second interface associated with the second cooking device; and a controller configured to change at least one of a layout of the control screen or content of the first interface and the second interface based on use history data of the first cooking device and the second cooking device.

According to an embodiment, a method for controlling a cooking apparatus may include: displaying a control screen including a first interface associated with the first cooking device and a second interface associated with the second cooking device; and changing at least one of a layout of the control screen or content of the first interface and the second interface based on use history data of the first cooking device and the second cooking device.

### [Description of Drawings]

FIG. 1 is a perspective view of an example of a cooking apparatus according to an embodiment.
FIG. 2 is a front view of an example of a cooking apparatus according to an embodiment.
FIG. 3 illustrates an example of a control screen displayed on a display of a cooking apparatus according to an embodiment.
FIG. 4 illustrates an example of a first screen associated with control of a first cooking device provided by a display of a cooking apparatus according to an embodiment.
FIG. 5 illustrates an example of a second screen associated with control of a second cooking device provided by a display of a cooking apparatus according to an embodiment.
FIG. 6 is a control block diagram illustrating an example configuration of a cooking apparatus according to an embodiment.
FIG. 7 is a flowchart illustrating an example method for controlling a cooking apparatus according to an embodiment.
FIG. 8 illustrates an example of a screen displayed on a display of a cooking apparatus according to an embodiment, when the display is turned on by detection of a cooking container.
FIG. 9 illustrates an example of regions according to priority on a control screen displayed on a display of a cooking apparatus according to an embodiment.
FIG. 10 illustrates an example in which only one interface is shown on a control screen displayed on a display of a cooking apparatus according to an embodiment.
FIG. 11 illustrates an example of interface content change on a control screen displayed on a display of a cooking apparatus according to an embodiment.
FIG. 12 illustrates an example of a layout change of a control screen in the event of a high-priority event, in the control screen displayed on a display of a cooking apparatus according to an embodiment.
FIG. 13 and FIG. 14 illustrate an example in which a screen displayed on a display of a cooking apparatus is automatically switched to a first screen according to an embodiment.
FIG. 15 and FIG. 16 illustrate an example in which a screen displayed on a display of a cooking apparatus is automatically switched to a second screen according to an embodiment.

### [Modes of the Invention]

Embodiments and features as described and illustrated in the disclosure are merely examples, and there may be various modifications replacing the embodiments and drawings at the time of filing this application.

The terms used herein is for the purpose of describing particular embodiments only and is not intended to limit the disclosure.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases. For example, it is to be understood that the phrases "A or B", "at least one of A and B", and "at least one of A or B" may include only A, only B, and both A and B.

For example, the singular form of a noun corresponding to an item may include one or more of the items unless clearly indicated otherwise in a related context.

It is to be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

It is to be understood that when an element is said to be "connected", "coupled", "supported" or "contacted" with another element, this includes not only when elements are directly connected, coupled, supported or contacted, but also when elements are indirectly connected, coupled, supported or contacted through a third element.

It is to be understood that when an element is "on" another element, this includes not only when the element is in contact with the other element, but also when there is another element between the two elements.

It is to be understood that in a case where a certain component (for example, a first component) is referred to, with or without the term "operatively" or "communicatively", as "coupled with," "coupled to," "connected with," or "connected to" another component (for example, a second component), it means that the component may be coupled with the other component directly, or via a third component.

The terms "front", "rear", "left", "right", "upper", and "lower" used in the following description are defined based on the drawings, and the shape and location of each component are not limited by these terms. For example, the front side may be defined as the +X side and the rear side may be defined as the - X side. For example, based on the drawings, the right side may be defined as the +Y side and the left side may be defined as the -Y side. For example, based on the drawings, the upper side may be defined as the +Z side and the lower side may be defined as the -Z side.

The expression "configured to" used herein may be used as, for example, the expression "suitable for," "having the capacity to," "designed to," "adapted to," "made to," or "capable of". The term "configured to" must not mean only "specifically designed to" in hardware.

Instead, the expression "a device configured to" may mean that the device is "capable of" operating together with another device or other components. For example, a "processor configured to perform A, B, and C" may mean a dedicated processor (e.g., an embedded processor) for performing a corresponding operation or a generic-purpose processor (e.g., a central processing unit (CPU) or an application processor) which may perform corresponding operations by executing one or more software programs which are stored in a memory device.

The terms, such as "first," "second", and the like used herein may refer to various elements of various embodiments of the disclosure, but do not limit the elements.

In the following description, terms such as "unit", "part", "block", "member", and "module" indicate a unit for processing at least one function or operation. For example, those terms may refer to at least one process processed by at least one hardware such as Field Programmable Gate Array (FPGA), Application Specific Integrated Circuit (ASIC), at least one software stored in a memory or a processor.

An embodiment of the disclosure will now be described in detail with reference to accompanying drawings. Throughout the drawings, like reference numerals or symbols refer to like parts or components.

Hereinafter, an operating principle and embodiments of the disclosure are described in detail with reference to the accompanying drawings.

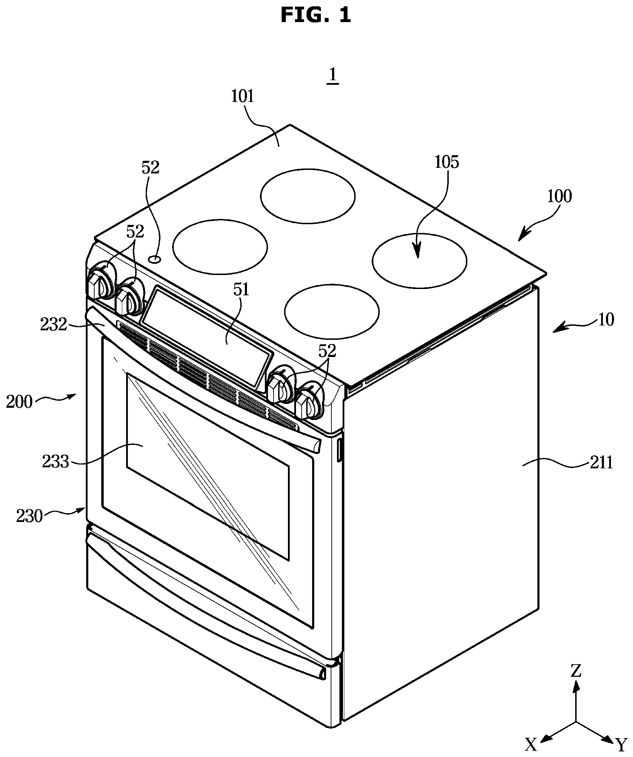

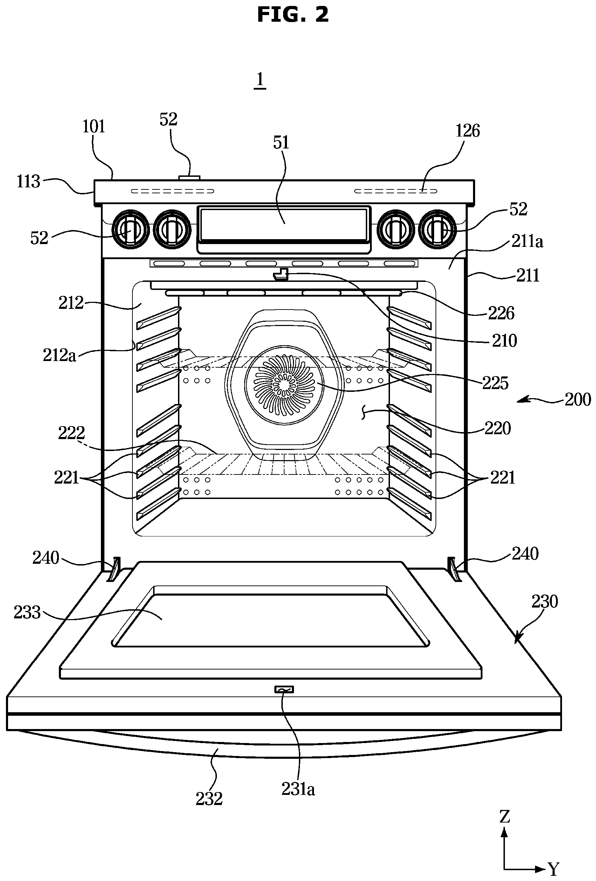

FIG. 1 is a perspective view of an example of a cooking apparatus according to an embodiment. FIG. 2 is a front view of an example of the cooking apparatus according to an embodiment.

A cooking apparatus 1 according to an embodiment of the disclosure may include a plurality of cooking devices 100 and 200.

In an embodiment, the plurality of cooking devices 100 and 200 may include a cooktop that uses electricity or gas to heat a cooking container containing food, an oven such as a gas oven or an electric oven, a microwave heating device (hereinafter, referred to as a microwave), an over the range (OTR), a gas grill, or an electric grill.

Although the cooking apparatus 1 is illustrated as including the first cooking device 100 and the second cooking device 200 in the drawings, the number of cooking devices is not limited thereto.

In addition, although the first cooking device 100 is illustrated as a cooktop (e.g., induction) and the second cooking device 200 is illustrated as an oven in the drawings, the type of cooking devices is not limited thereto.

The cooking apparatus 1 may include a main body 10. The plurality of cooking devices 100 and 200 may be provided as an integral type configured by one main body 10.

According to various embodiments, each of the plurality of cooking devices 100 and 200 may be separable from each other, and may include a main body.

In the disclosure, the main body 10 may include a cooking plate 101 and a case 113 of the first cooking device 100, and may form a cooking chamber 220 of the second cooking device 200.

The first cooking device 100 may be disposed on the second cooking device 200. For example, the first cooking device 100 may be stacked on the second cooking device 200.

The cooking apparatus 1 may include at least one input device 52 and a display 51.

For example, the main body 10 may be provided with at least one input device 52 and the display 51.

In an embodiment, the display 51 may be provided on the upper surface of the cooking plate 101 of the first cooking device 100.

In an embodiment, the at least one input device 52 may include a knob. The knob may be a device for controlling a plurality of cooking regions 105 of the first cooking device 100. Controlling the plurality of cooking regions 105 may include controlling a heating intensity of a heating element 126 corresponding to the plurality of cooking regions 105.

According to various embodiments, the knob may be omitted or replaced by another type of input device. For example, the at least one input device 52 may include at least one button for controlling the plurality of cooking regions 105 of the first cooking device 100.

In an embodiment, the at least one input device 52 may include a power button.

The power button may be a button for turning on or off the cooking apparatus 1 or various components of the cooking apparatus 1.

For example, the power button may be a button for turning on and/or off the display 51.

Examples of the at least one input device 52 are not limited thereto, and any component capable of converting sensory information received from a user into an electrical signal may be used as the at least one input device 52.

In a case where the display 51 is implemented as a touch display, the display 51 may also be an example of the at least one input device.

The display 51 may include, for example, a liquid crystal display (LCD) panel, an indicator, a light emitting diode (LED) panel.

In an embodiment, the display 51 may be implemented as a touch pad, a touch screen, and the like, to receive user input.

The display 51 may display various screens for interaction between a user and the cooking apparatus 1.

The first cooking device 100 may include the cooking plate 101 on which a cooking container may be placed. For example, the cooking plate 101 may have a substantially flat plate shape. For example, the cooking plate 101 may include tempered glass such as ceramic glass. The cooking plate 101 may have a cooking region on which a cooking container may be placed. For example, the cooking plate 101 may include a plurality of cooking regions 105, and thus a plurality of cooking containers may be placed.

The first cooking device 100 may include the case 113. The case 113 may be disposed below the cooking plate 101. The case 113 may be coupled to the lower part of the cooking plate 101.

The case 113 may accommodate various components of the first cooking device 100. The case 113 may accommodate electronic equipment.

The case 113 may accommodate the heating element 126 to be described below.

The first cooking device 100 may include the heating element 126. For example, the heating element 126 may be disposed below the plurality of cooking regions 105. The heating element 126 may be arranged to heat the cooking plate 101. The heating element 126 may be disposed below the cooking plate 101 at a position corresponding to the cooking region of the cooking plate 101. The heating element 126 may include a coil, a heater, and/or a gas burner.

A current whose magnitude changes with time may be applied to the coil. As the current is applied to the coil, a magnetic field may be formed around the coil. As the current applied to the coil changes, the magnetic field formed around the coil may also change. An eddy current due to the change of the magnetic field may flow on the surface of the cooking container placed on the cooking plate 101, thereby heating the cooking container.

Although, in the drawings, the first cooking device 100 is illustrated as an induction which is an electric cooktop, the disclosure is not limited thereto. As long as the first cooking device 100 may heat a cooking container, the type of the first cooking device 100 is not limited. For example, the first cooking device 100 may be provided as a gas range, a highlight (halogen), a hybrid, or an oven.

A printed board assembly (PBA) may be provided in the case 113 of the first cooking device 100. The PBA may supply a driving current to the heating element 126. The PBA may be provided to implement a circuit for the operation of the heating element 126. The PBA may include various elements and/or circuits for supplying a driving current to the heating element 126.

The second cooking device 200 may include an inner case 212 in which the cooking chamber 220 is formed. The inner case 212 may be provided inside an outer case 211 of the main body 10 described below. Specifically, the inner case 212 may be disposed inside the outer case 211 and may be coupled to the outer case 211.

The cooking chamber 220 may be formed to have an open front to allow food to be taken in and out. The inner case 212 may include a front opening 212a formed to be open so that food may be taken in and out of the cooking chamber 220. A side of the main body 10 in which the front opening 212a is formed is defined as the front of the main body 10.

For example, the inner case 212 may be formed to have a box shape with an approximately open front.

Inner walls of the inner case 212 may be coated to prevent corrosion of the inner walls of the inner case 212 due to condensate that may occur during a condensation process of water vapor or moisture contained in the food itself. The inner walls of the inner case 212 may be dried by heat generated during a cooking process.

A tray 222 on which food or a cooking container containing the food may be placed, and a rack 221 supporting the tray 222 may be provided inside the cooking chamber 220. For example, the tray 222 may be provided to be detachable from the rack 221. For example, the rack 221 may be provided on the left inner wall or the right inner wall of the inner case 212.

The second cooking device 200 may include a heater 226 configured to provide heat to the inside of the cooking chamber 220. For example, the heater 226 may include a gas burner for generating heat by burning gaseous fuel. However, the type of components included in the second cooking device 200 to heat food inside the cooking chamber 220 is not limited thereto, and the second cooking device 200 may include a magnetron (not shown) that emits electromagnetic waves into the cooking chamber 220 to generate heat by the rotation of water molecules inside the food.

The second cooking device 200 may include a convection fan 225 to circulate air inside the cooking chamber 220. The convection fan 225 may receive rotational force from a fan motor and rotate to circulate air inside the cooking chamber 220. As the air in the cooking chamber 220 is circulated by the convection fan 225, the heat generated by the heater 226 may be evenly transferred inside the cooking chamber 220. For example, the convection fan 225 may be disposed at the rear side of the cooking chamber 220, but its location is not limited thereto.

The second cooking device 200 may include the outer case 211. Various components of the second cooking device 200 may be accommodated in the outer case 211. The outer case 211 may form an exterior of the second cooking device 200. The outer case 211 may be arranged to surround an upper side, a lower side, a rear side, a left side, a right side, etc. of the inner case 212.

An insulation (not shown) may be provided between the inner case 212 and the outer case 211 to prevent heat in the cooking chamber 220 from being discharged to the outside of the main body 10. For example, the insulation may include a material, such as glass fiber or asbestos.

The outer case 211 may include a front frame 211a. The front frame 211a may be provided at the front part of the main body 10. The front frame 211a may form at least a part of the front of the main body 10. When the door 230 closes the cooking chamber 220, the front frame 211a may be covered by the door 230.

The front frame 211a may have a frame shape with an approximately opening. The front frame 211a may be formed in the shape of a frame surrounding the front opening 212a.

For example, the inner case 212 may be coupled to the front frame 211a. A portion of the front side of the inner case 212 may be coupled to the front frame 211a.

The outer case 211 may include a rear panel disposed at the rear part of the second cooking device 200. The rear panel may form at least a portion of the rear exterior of the second cooking device 200. Various components including electronic components, such as a gas supply pipe, a printed circuit board, the heater 226, and the convection fan 225, may be mounted on the rear panel.

In addition, the outer case 211 may include a left panel forming the left side of the second cooking device 200, a right panel forming the right side of the second cooking device 200, a base forming the bottom of the second cooking device 200, and the like.

The second cooking device 200 may include an electronic equipment chamber provided inside the main body 10 and in which various electronic components are arranged. The electronic equipment chamber may be separated from the cooking chamber 220. The electronic equipment chamber may be formed inside the outer case 211. The electronic equipment chamber may be formed outside the inner case 212. For example, the electronic equipment chamber may accommodate components such as a printed circuit board on which electronic components for controlling the operation of various components of the second cooking device 200 are mounted, a cooling fan module, and a lever device.

The door 230 may include a handle 232 provided for a user to grasp to open and close the door 230. In order for the user to easily open and close the door 230, the handle 232 may be positioned adjacent to a portion of the door 230 opposite to a rotation axis of the door 230. It is illustrated in FIG. 1 that the handle 232 is provided on the front side of the door 230 as an embodiment, but the disclosure is not limited thereto, and the handle 232 may be provided at various locations on the door 230. The 'front side of the door 230' may refer to one side of the door 230 in the X direction when the door 230 closes the cooking chamber 220.

The door 230 may include a transparent portion 233 formed to be transparent to allow the user to see the inside of the cooking chamber 220, even when the door 230 closes the cooking chamber 220. The transparent portion 233 may include various transparent materials such as glass. For example, the transparent portion 233 may include a plurality of glass plates that are spaced apart from each other and forming an insulating space therebetween so as to prevent heat in the cooking chamber 220 from being transferred to the outside of the door 230 through the transparent portion 233.

The second cooking device 200 may include a hinge 240 connecting the main body 10 and the door 230. The hinge 240 may rotatably support the door 230. The hinge 240 may be coupled to each of the main body 10 and the door 230. The door 230 may be coupled to the main body 10 by the hinge 240.

For example, the hinge 240 may be mounted on a lower part of the main body 10.

For example, the hinge 240 may include a pair of hinges 240.

The second cooking device 200 may include a latch 210. The latch 210 may be provided to support the door 230 or not to support the door 230. Specifically, the latch 210 may support the door 230 to prevent the door 230 from being opened when the cooking chamber 220 is closed by the door 230, or may release the support of the door 230 to allow the door 230 to be opened. The expression "the latch 210 releases the support of the door 230" refers to a state in which the latch 210 is separated from the door 230 and does not support the door 230 closing the cooking chamber 220.

The second cooking device 200 may include a door hole 231a formed to allow a portion of the latch 210 to be inserted.

The cooking apparatus 1 described above with reference to FIG. 1 and FIG. 2 is merely an example of the cooking apparatus according to the disclosure, and the disclosure is not limited thereto, and the cooking apparatus may include various configurations.

In addition to the first cooking device 100 and the second cooking device 200, the cooking apparatus 1 may include a third cooking device to an n^{th} cooking device (n is a natural number of 3 or more).

The plurality of cooking devices 100 and 200 may include at least one of a cooktop that uses electricity or gas to heat a cooking container containing food, an oven such as a gas oven or an electric oven, a microwave heating device (hereinafter, referred to as a microwave), an over the range (OTR), a gas grill, or an electric grill. An oven, such as a gas oven or an electric oven, may include a dual-door oven having two cooking chambers separated from each other, or an oven having one cooking chamber but capable of being divided into two cooking chambers by a divider.

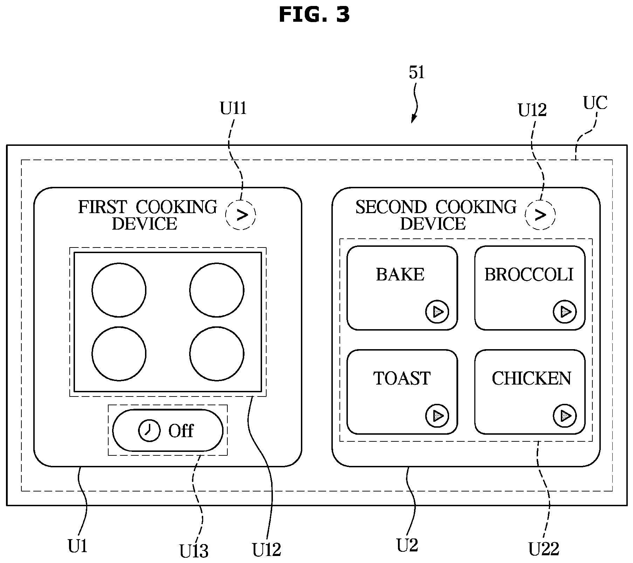

FIG. 3 illustrates an example of a control screen displayed on the display of the cooking apparatus according to an embodiment.

Referring to FIG. 3, the display 51 according to an embodiment may display a control screen UC including a first interface U1 associated with the first cooking device 100 and a second interface U2 associated with the second cooking device 200.

The first interface U1 may include various content related to the first cooking device 100.

The content may include at least one interface element.

In an embodiment, the first interface U1 may include an interface element U11 for switching the control screen UC to a first screen UC1 associated with control of the first cooking device 100.

In response to the selection of the interface element U11 for switching the control screen UC to the first screen UC1 associated with control of the first cooking device 100, the display 51 may display the first screen UC1 instead of the control screen UC. In other words, in response to the selection of the interface element U11 for switching the control screen UC to the first screen UC1 associated with control of the first cooking device 100, the screen output from the display 51 may be switched from the control screen UC to the first screen UC1.

In an embodiment, the first interface U1 may include a first control interface U12 for controlling the first cooking device 100.

The first control interface U12 is for controlling the plurality of cooking regions 105, and may visually display the plurality of cooking regions 105.

For example, the first control interface U12 may include a plurality of visualized cooking regions 105. The first control interface U12 may provide a user experience for easily controlling the plurality of cooking regions 105.

When one of the plurality of visualized cooking regions 105 included in the first control interface U12 is selected, a heating intensity setting applied to the selected cooking region may be changed.

For example, when a lower left cooking region is selected from among the plurality of visualized cooking regions 105 included in the first control interface U12, the heating intensity of the heating element 126 corresponding to the lower left cooking region among the plurality of cooking regions 105 on the cooking plate 101 may be changed.

According to various embodiments, the plurality of visualized cooking regions 105 may output a visual indicator indicating whether a cooking container is placed.

As will be described below, the first cooking device 100 may detect whether a cooking container is placed on the plurality of cooking regions 105, and may identify a cooking region on which a cooking container is detected.

The display 51 may display the cooking region on which the cooking container is detected so as to be distinguished from a cooking region identified as not having a cooking container placed therein.

In an embodiment, the first interface U1 may include an interface element U13 for setting a timer of the first cooking device 100.

After completing the setting of the heating intensity for at least one of the plurality of cooking regions 105 through the first control interface U12, a user may set a timer for the corresponding cooking region through the interface element U13 for setting the timer of the first cooking device 100.

Examples of elements included in the first interface U1 associated with the first cooking device 100 are not limited thereto, and any element capable of providing a function associated with the first cooking device 100 may be included in the first interface U1.

The second interface U2 may include various content related to the second cooking device 200.

The content may include at least one interface element.

In an embodiment, the second interface U2 may include an interface element U21 for switching the control screen UC to a second screen UC2 associated with control of the second cooking device 200.

In response to the selection of the interface element U21 for switching the control screen UC to the second screen UC2 associated with control of the second cooking device 200, the display 51 may display the second screen UC2 instead of the control screen UC. In other words, in response to the selection of the interface element U21 for switching the control screen UC to the second screen UC2 associated with control of the second cooking device 200, the screen output from the display 51 may be switched from the control screen UC to the second screen UC2.

In an embodiment, the second interface U2 may include a second control interface U22 for controlling the second cooking device 200.

The second control interface U22 is for setting a cooking time and/or a cooking temperature of the second cooking device 200, and may include at least one interface element for selecting a dish to be cooked.

When a dish or recipe to be cooked is selected, the second cooking device 200 may start cooking based on a corresponding cooking time and/or cooking temperature setting.

For example, when 'Bake' is selected as a dish or recipe to be cooked, the second cooking device 200 may start cooking according to a cooking time and/or cooking temperature setting corresponding to 'Bake'.

The second control interface U22 may provide a user experience for easily controlling the second cooking device 200.

In an embodiment, at least one interface element included in the second control interface U22 may be referred to as a shortcut element, in that the cooking temperature and the cooking time are set by selecting a dish or recipe without directly setting the cooking temperature and the cooking time.

Examples of elements included in the second interface U2 associated with the second cooking device 200 are not limited thereto, and any element capable of providing a function associated with the second cooking device 200 may be included in the second interface U2.

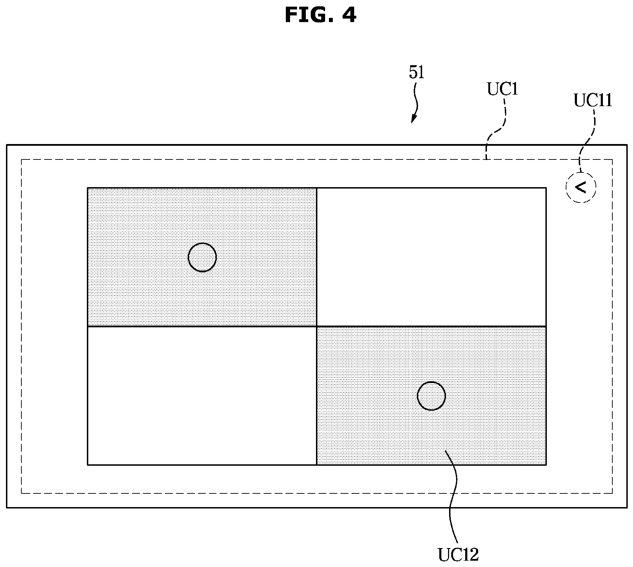

FIG. 4 illustrates an example of a first screen associated with control of the first cooking device provided by the display of the cooking apparatus according to an embodiment.

Referring to FIG. 4, the display 51 may display the first screen UC1 associated with control of the first cooking device 100.

The first screen UC1 is for controlling the plurality of cooking regions 105, and may visually display the plurality of cooking regions 105.

For example, the first screen UC1 may include a visualized first cooking region, a visualized second cooking region, a visualized third cooking region, and a visualized fourth cooking region.

In an embodiment, a visualized cooking region in which cooking is ongoing may be displayed so as to be distinguished from a visualized cooking region in which cooking is not ongoing.

In an embodiment, a visualized cooking region where a cooking container is placed may be displayed so as to be distinguished from a visualized cooking region where a cooking container is not placed.

The first screen UC1 may display corresponding control parameters (e.g., heating intensity and/or timer) in a cooking region that is in operation.

When a cooking region in operation is selected, the first screen UC1 may provide an interface UC12 for changing control parameters (e.g., heating intensity and/or timer) or stopping operation of the selected cooking region.

In an embodiment, a user may select any one cooking region included in the first screen UC1, and then set a cooking temperature and a cooking time.

When any one cooking region included in the first screen UC1 is selected, the display 51 may provide an interface for setting control parameters of the selected cooking region.

In an embodiment, a user may input (e.g., a drag input) a command for applying control parameters being applied to any one cooking region included in the first screen UC1 to another cooking region.

The first screen UC1 is for controlling the first cooking device 100, and may not include an interface element associated with the second cooking device 200.

The first screen UC1 may include an interface element UC11 for switching the first screen UC1 to the control screen UC.

The display 51 may display the control screen UC instead of the first screen UC1, in response to the selection of the interface element UC11 for switching the first screen UC1 to the control screen UC. In other words, in response to the selection of the interface element UC11 for switching the first screen UC1 to the control screen UC, the screen output from the display 51 may be switched from the first screen UC1 to the control screen UC.

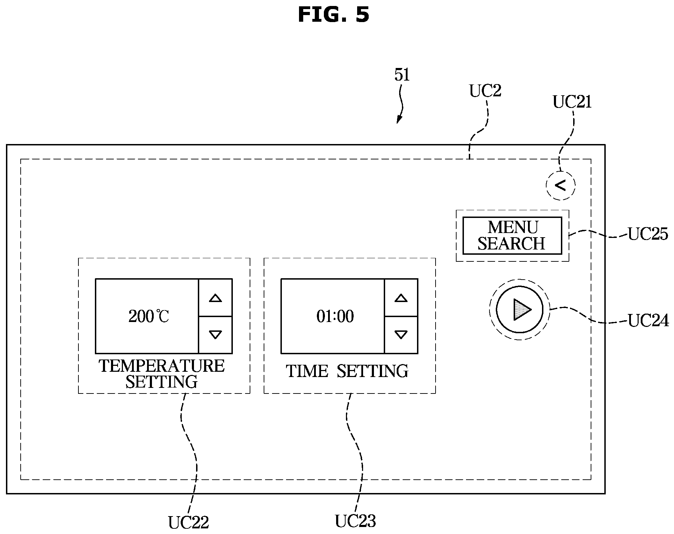

FIG. 5 illustrates an example of a second screen associated with control of the second cooking device provided by the display of the cooking apparatus according to an embodiment.

Referring to FIG. 5, the display 51 may display the second screen UC2 associated with control of the second cooking device 200.

The second screen UC2 is for controlling the second cooking device 200, and may include an interface element UC22 for setting a cooking temperature, an interface element UC23 for setting a cooking time, an interface element UC24 for inputting a cooking start command, and/or an interface element UC25 for searching for a dish or recipe.

A user may set a cooking temperature through the interface element UC22 for setting the cooking temperature.

A user may set a cooking time through the interface element UC23 for setting the cooking time.

A user may start cooking according to a cooking setting which is set by the user by setting the cooking temperature through the interface element UC22 for setting the cooking temperature, setting the cooking time through the interface element UC23 for setting the cooking time, and then selecting the cooking start element UC24.

The second screen UC2 is for controlling the second cooking device 200, and may not include an interface element associated with the first cooking device 100.

The second screen UC2 may include an interface element UC21 for switching the second screen UC2 to the control screen UC.

The display 51 may display the control screen UC instead of the second screen UC2, in response to the selection of the interface element UC21 for switching the second screen UC2 to the control screen UC. In other words, in response to the selection of the interface element UC11 for switching the second screen UC2 to the control screen UC, the screen output from the display 51 may be switched from the second screen UC2 to the control screen UC.

In an embodiment, when the second cooking device 200 is in operation, the second screen UC2 may include guide information for guiding the cooking progress.

The guide information for guiding the cooking progress may include information about the remaining time until the second cooking device 200 completes cooking, information about a cooking setting (e.g., cooking temperature) of the ongoing cooking, information about a cooking stage (e.g., preheating stage) of the ongoing cooking, and/or information about a dish or recipe being cooked by the second cooking device 200.

In an embodiment, when the second cooking device 200 is in operation, the second screen UC2 may include an interface element for stopping the ongoing cooking. When the second cooking device 200 is in operation, a user may select a cooking stop element displayed on the second screen UC2 to stop the operation of the cooking device.

According to various embodiments, the cooking stop element may be included in the second interface U2 of the control screen UC.

According to the disclosure, a user may easily control the plurality of cooking devices 100 and 200 through the display 51.

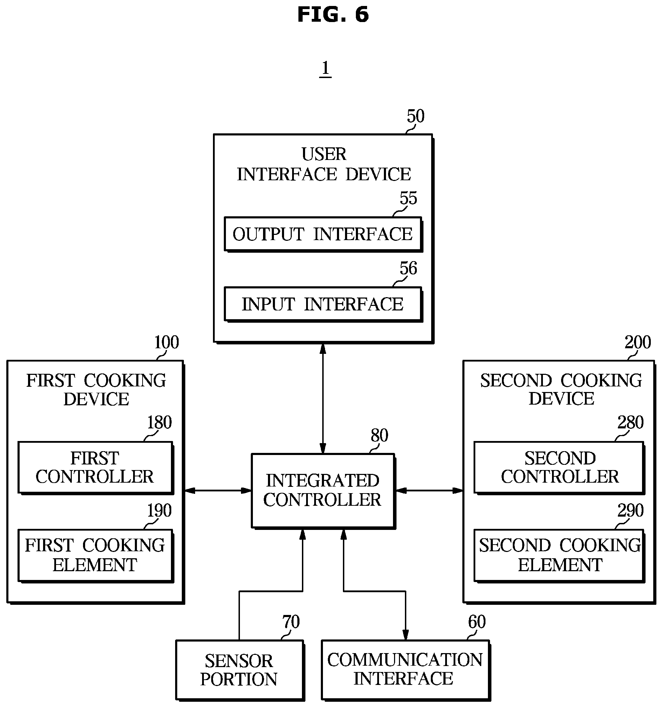

FIG. 6 is a control block diagram illustrating an example configuration of a cooking apparatus according to an embodiment.

Referring to FIG. 6, the cooking apparatus 1 according to an embodiment may include a user interface device 50, a communication interface 60, a sensor portion 70, the first cooking device 100, the second cooking device 200, and/or an integrated controller 80.

The cooking apparatus 1 may include the user interface device 50 for interaction between the cooking apparatus 1 and a user.

The user interface device 50 may include an output interface 55 and an input interface 56.

At least one output interface 55 may generate sensory information to transmit various information related to the operation of the cooking apparatus 1 to a user.

For example, the at least one output interface 55 may transmit information related to settings of the cooking apparatus 1 and an operation time of the cooking apparatus 1 to a user. Information about the operation of the cooking apparatus 1 may be output via the display 51, an indicator, and/or a voice. The at least one output interface 55 may include, for example, a liquid crystal display (LCD) panel, an indicator, a light emitting diode (LED) panel, a speaker, and the like.

In an embodiment, the at least one output interface 55 may include the display 51.

In an embodiment, the at least one output interface 55 may output sensory information (e.g., visual information, audible information, etc.) associated with control of the cooking apparatus 1.

At least one input interface 56 may convert sensory information received from a user into an electrical signal.

In a case where the display 51 includes the touch screen display 51, the touch screen display 51 may correspond to an example of the output interface 55 and the input interface 56.

The at least one input interface 56 may include a power button 52 for turning on the cooking apparatus 1.

Each button may include a visual indicator (e.g., a phrase, an icon, etc.) that may indicate its function.

The at least one input interface 56 may include, for example, a tact switch, a push switch, a slide switch, a toggle switch, a micro switch, a touch switch, a touch pad, a touch screen, a jog dial, and/or a microphone.

In the disclosure, 'button' may be replaced with a user interface element (UI element), a tact switch, a push switch, a slide switch, a toggle switch, a micro switch, a touch switch, a touch pad, a touch screen, a jog dial, and/or a microphone.

In an embodiment, when the cooking apparatus 1 is turned on through the power button 52, the touch screen display 51 may be turned on. When the cooking apparatus 1 is turned off through the power button, the touch screen display 51 may be turned off.

In an embodiment, when the touch screen display 51 detects a touch input, the touch screen display 51 may be turned on.

The cooking apparatus 1 may process a user input received via the user interface device 50, and may output information related to the cooking apparatus 1 via the user interface device 50.

Information related to the cooking apparatus 1 may include an interface for controlling the operation of the cooking apparatus 1. The interface for controlling the operation of the cooking apparatus 1 may be provided through the control screen UC, the first screen UC1, and/or the second screen UC2 described above.

The cooking apparatus 1 may control the operation of the cooking apparatus 1 based on a user input received via the user interface device 50.

For example, the cooking apparatus 1 may control the operation of the first cooking device 100 based on a user input received via the first interface U1. The cooking apparatus 1 may control the operation of the second cooking device 200 based on a user input received via the second interface U2.

As another example, the cooking apparatus 1 may control the operation of the first cooking device 100 based on a user input received via the first screen UC1. The cooking apparatus 1 may control the operation of the second cooking device 200 based on a user input received via the second screen UC2.

The cooking apparatus 1 may include the communication interface 60 for communicating with an external device (e.g., a server, a user device) by wire and/or wirelessly.

The communication interface 60 may include at least one of a short-range wireless communication module or a long-range wireless communication module.

The communication interface 60 may transmit data to an external device (e.g., a server, a user device, a temperature probe) or receive data from an external device. To this end, the communication interface 60 may support establishment of a direct (e.g., wired) communication channel or a wireless communication channel between external devices, and performance of communication through the established communication channel. According to an embodiment, the communication interface 60 may include a wireless communication module (e.g., a cellular communication module, a short-range wireless communication module, or a global navigation satellite system (GNSS) communication module) or a wired communication module (e.g., a local area network (LAN) communication module, or a power line communication module). A corresponding communication module among these may communicate with an external device via a first network (e.g., a short-range communication network such as Bluetooth, wireless fidelity (Wi-Fi) direct, or infrared data association (IrDA)) or a second network (e.g., a long-range communication network such as a legacy cellular network, a 5G network, a next-generation communication network, the Internet, or a computer network (e.g., LAN or WAN)). These various types of communication modules may be integrated into one component (e.g., a single chip) or may be implemented as a plurality of components (e.g., a plurality of chips) separate from each other.

The short-range wireless communication module may include a Bluetooth communication module, a Bluetooth low energy (BLE) communication module, a near field communication module, a WLAN (Wi-Fi) communication module, a Zigbee communication module, an infrared data association (IrDA) communication module, a Wi-Fi direct (WFD) communication module, an ultrawideband (UWB) communication module, an Ant+ communication module, a microwave (uWave) communication module, etc., but is not limited thereto.

The long-range wireless communication module may include a communication module that performs various types of long-range communication, and may include a mobile communication interface. The mobile communication interface transmits and receives radio signals with at least one of a base station, an external terminal, or a server on a mobile communication network.

In an embodiment, the communication interface 60 may communicate with an external device through a nearby access point (AP). The access point (AP) may connect a local area network (LAN) to which the cooking apparatus 1 is connected to a wide area network (WAN) to which the server is connected. The cooking apparatus 1 may be connected to the server through the wide area network (WAN).

The cooking apparatus 1 may receive recipe information from an external device via the communication interface 60.

The cooking apparatus 1 may receive temperature information of an ingredient from a temperature probe via the communication interface 60.

According to various embodiments, the cooking apparatus 1 may also obtain temperature information of an ingredient through the sensor portion 70 to be described below.

Information received via the communication interface 60 may be transmitted to the integrated controller 80.

The integrated controller 80 may transmit information related to the cooking apparatus 1 to an external device via the communication interface 60.

The cooking apparatus 1 may include the sensor portion 70 collecting sensor data related to the cooking apparatus 1.

The sensor portion 70 may be a component of the first cooking device 100 and/or the second cooking device 200.

For example, the sensor portion 70 may include at least one first sensor that collects sensor data related to an operation state of the first cooking device 100.

The at least one first sensor may include a container detection sensor. The container detection sensor may detect a cooking container placed on the cooking region 105. Detection of the cooking container placed on the cooking region 105 may include detecting whether a cooking container is placed on the cooking region 105.

According to various embodiments, detecting the cooking container placed on the cooking region 105 may include identifying the heating element 126 corresponding to the cooking container placed on the cooking plate 101.

The container detection sensor may include a current sensor included in a coil driving circuit for driving the heating element 126.

The first controller 180 may perform a container detection operation of detecting whether a cooking container is placed on the cooking region 105 by applying an inspection current to the heating element 126.

The container detection sensor may include a capacitance sensor detecting a change in capacitance that changes as a cooking container is placed on the cooking plate 101.

The controller 180 may identify whether a cooking container is placed on the cooking plate 101 based on a change value of capacitance detected by the capacitance sensor. Furthermore, the controller 180 may identify a cooking region in which a cooking container is placed from among the plurality of cooking regions 105 based on the change value of capacitance detected by the capacitance sensor.

The sensor portion 70 may include at least one second sensor that collects sensor data related to an operation state of the second cooking device 200.

The at least one second sensor may include a door opening/closing sensor.

The door opening/closing sensor may detect whether the door 230 is opened or closed. For example, the door opening/closing sensor may be a sensor detecting that the latch 210 is inserted into the door hole 231a, but the type of the door opening/closing sensor is not limited thereto.

The at least one second sensor may include a container detection sensor. The container detection sensor may detect whether a cooking container is placed inside the cooking chamber 220.

Detecting whether a cooking container is placed inside the cooking chamber 220 may include detecting whether food is placed inside the cooking chamber 220.

The container detection sensor may be employed as various sensors capable of obtaining information about the inside of the cooking chamber 220, such as an infrared sensor and a camera.

According to various embodiments, the sensor portion 70 may include a camera for obtaining information of food inside the cooking apparatus 1. The camera may obtain an image of food inside the cooking apparatus 1, and the cooking apparatus 1 may identify a state (e.g., degree of browning of the food) based on the image of the food.

In an embodiment, the camera may be a thermal imaging camera, and the cooking apparatus 1 may identify the temperature of the food based on a thermal image obtained from the thermal imaging camera.

According to various embodiments, the sensor portion 70 may include a proximity sensor detecting user approach to the cooking apparatus 1.

According to various embodiments, the sensor portion 70 may further include a camera capturing an image around the cooking apparatus 1.

Sensor data collected by the sensor portion 70 may be transmitted to the integrated controller 80.

The first cooking device 100 may include a first cooking element 190, and the first controller 180 for controlling the first cooking element 190. As described above, the first cooking device 100 may further include at least one first sensor included in the sensor portion 70.

In the disclosure, a cooking element is a component essentially used to cook food, and may include a component, such as the heating element 126 of the first cooking device 100, and the convection fan 225 and the heater 226 of the second cooking device 200.

Assuming that the first cooking device 100 is an induction as in the above description, the first cooking element 190 may include the heating element 126.

The first controller 180 may control the overall operation of the first cooking device 100. For example, the first controller 180 may control the first cooking element 190.

Controlling the first cooking element 190 by the first controller 180 may include controlling the heating element 126 by the first controller 180. Controlling the heating element 126 by the first controller 180 may include controlling an operation intensity and/or operation time of the heating element 126 by the first controller 180. Performing cooking in the cooking region 105 by the first controller 180 may include controlling the heating element 126 corresponding to the cooking region 105 by the first controller 180.

The first controller 180 may include at least one processor for controlling the operation of the first cooking device 100, and at least one memory storing programs and data for controlling the operation of the first cooking device 100.

The first controller 180 may receive a control command from the integrated controller 80, and may control the first cooking element 190 according to the control command received from the integrated controller 80.

The second cooking device 200 may include a second cooking element 290 and a second controller 280 for controlling the second cooking element 290. As described above, the second cooking device 200 may further include at least one second sensor included in the sensor portion 70.

Assuming that the second cooking device 200 is an oven as in the above description, the second cooking element 290 may include the convection fan 225 and/or the heater 226.

The second controller 280 may control the overall operation of the second cooking device 200. For example, the second controller 280 may control the second cooking element 290.

Controlling the second cooking element 290 by the second controller 280 may include controlling the convection fan 225 and/or the heater 226 by the second controller 280. Controlling the convection fan 225 and/or the heater 226 by the second controller 280 may include controlling an operation intensity and/or operation time of the convection fan 225 and/or the heater 226 by the second controller 280. Performing cooking by the second controller 280 may include controlling the convection fan 225 and/or the heater 226 by the second controller 280.

The second controller 280 may include at least one processor for controlling the operation of the second cooking device 200, and at least one memory storing programs and data for controlling the operation of the second cooking device 200.

The second controller 280 may receive a control command from the integrated controller 80, and may control the second cooking element 290 according to the control command received from the integrated controller 80.

The integrated controller 80 may control the first cooking device 100 and the second cooking device 200.

For example, the integrated controller 80 may transmit a control command for controlling the first or second cooking device 100 or 200 to the first or second controller 180 or 280 according to a user input obtained via the user interface device 50.

As another example, the integrated controller 80 may transmit a control command for controlling the first or second cooking device 100 or 200 to the first or second controller 180 or 280 according to information and/or command obtained via the communication interface 60.

The integrated controller 80 may switch a screen output by the display 51, which is an example of the output interface 55, based on sensor data collected through the sensor portion 70.

In addition, the integrated controller 80 may change the layout of the control screen UC output by the display 51, or may change the content of the first interface U1 and/or the second interface U2 according to the use history of the first cooking device 100 and the second cooking device 200.

The integrated controller 80 may include at least one processor for controlling the operation of the cooking apparatus 1, and at least one memory storing programs and data for controlling the operation of the cooking apparatus 1.

At least one memory may store data required for various embodiments. The memory may be implemented as a memory embedded in the cooking apparatus 1, or as a memory detachable from the cooking apparatus 1 depending on the data storage use. For example, data for driving the cooking apparatus 1 may be stored in the memory embedded in the cooking apparatus 1, and data for an extended function of the cooking apparatus 1 may be stored in the memory detachable from the cooking apparatus 1. Meanwhile, the memory embedded in the cooking apparatus 1 may be implemented as at least one of a volatile memory (e.g., dynamic random access memory (DRAM), static RAM (SRAM), or synchronous dynamic RAM (SDRAM), etc.), or a non-volatile memory (e.g., one time programmable read only memory (OTPROM), programmable ROM (PROM), erasable programmable ROM (EPROM), electrically erasable programmable ROM (EEPROM), mask ROM, flash ROM, flash memory (e.g., NAND flash or NOR flash, etc.), a hard drive, or a solid state drive (SSD)). In addition, the memory detachable from the cooking apparatus 1 may be implemented as a memory card (e.g., compact flash (CF), secure digital (SD), micro secure digital (Micro-SD), mini secure digital (Mini-SD), extreme digital (xD), multi-media card (MMC), etc.), an external memory (e.g., universal serial bus (USB) memory) connectable to a USB port, and the like.

In an embodiment, the at least one memory may store use history data of the first cooking device 100 and use history data of the second cooking device 200. The use history data of the first cooking device 100 and the second cooking device 200 may include data about use time, use settings, and the like, of the first cooking device 100 and the second cooking device 200.

The use history data may be classified according to date, day of the week, and/or time, and may be stored in at least one memory.

Data about use time may include data about a use time point and a use period of the first cooking device 100 and the second cooking device 200.

The use time point may include a date, a day of the week, or a time. The use period may include a time taken from the start of cooking to the end of cooking.

Data about use time may be classified according to date, day of the week, and/or time, and may be stored in at least one memory.

Data about use settings may include data about cooking settings of the first cooking device 100 and the second cooking device 200.

Cooking settings include a cooking time, cooking temperature, and heating intensity. Cooking settings may also include dish or recipe information.

Data about use settings may be classified according to date, day of the week, and/or time, and may be stored in at least one memory.

The use history data of the first cooking device 100 and the second cooking device 200 may be transmitted to an external device (e.g., a server device) via the communication interface 60, and may be stored in the external device.

The at least one processor may control the overall operation of the cooking apparatus 1. Specifically, the at least one processor may be connected to each component of the cooking apparatus 1 to control the overall operation of the cooking apparatus 1. For example, the at least one processor may be electrically connected to a memory to control the overall operation of the cooking apparatus 1. The processor may be a single processor or a plurality of processors.

The at least one processor may perform operations of the cooking apparatus 1 according to various embodiments by executing at least one instruction stored in the memory.

The at least one processor may include at least one of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor may control one or any combination of other components of the cooking apparatus 1, and may perform communication-related operations or data processing. The at least one processor may execute at least one program or instruction stored in the memory. For example, the at least one processor may perform a method according to at least one embodiment of the disclosure by executing at least one instruction stored in the memory.

According to various embodiments, the first controller 180 and the second controller 280 may also be a component of the integrated controller 80, and the first controller 180 and/or the second controller 280 may function as the integrated controller 80.

Accordingly, hereinafter, for convenience of description, the first controller 180, the second controller 280, and the integrated controller 80 are collectively referred to as 'the controller 80'.

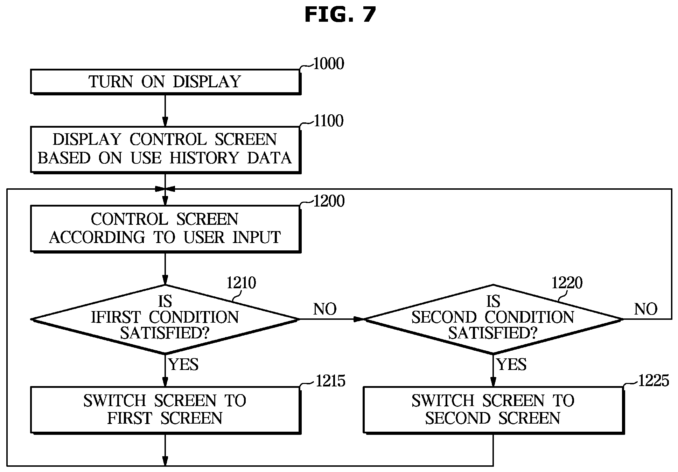

FIG. 7 is a flowchart illustrating an example method for controlling a cooking apparatus according to an embodiment.

Referring to FIG. 7, the cooking apparatus 1 may turn on the display 51 in response to a turn-on condition of the display 51 being satisfied (1000).

In an embodiment, in a case where the display 51 is turned on in response to the turn-on condition of the display 51 being satisfied, the controller 80 may control the display 51 to display the control screen UC as an initial screen.

In various embodiments, the turn-on condition of the display 51 may include a presence condition and/or a detection condition.

The presence condition includes an event indicating that a user is highly likely to be present near the cooking apparatus 1.

For example, the presence condition may include at least one of a power button being selected, the display 51 being touched, or a user's approach being detected.

As another example, the presence condition may include a preset audio input (e.g., wake-up word) being received through a microphone of the at least one input interface 56.

The detection condition includes an event indicating that a user is highly likely to intend to use any one of the plurality of cooking devices 100 and 200.

For example, the detection condition may include a cooking container being detected by the first cooking device 100 or the second cooking device 200.

As another example, the detection condition may include a preset audio input (e.g., wake-up word) being received through the microphone of the at least one input interface 56.

In an embodiment, in a case where the display 51 is turned on in response to the presence condition being satisfied, the controller 80 may control the display 51 to display the control screen UC as an initial screen.

According to various embodiments, although not shown in FIG. 7, in a case where the display 51 is turned on in response to the detection condition being satisfied, the controller 80 may control the display 51 to display a screen associated with control of a cooking device that detects the cooking container from among the first cooking device 100 and the second cooking device 200.

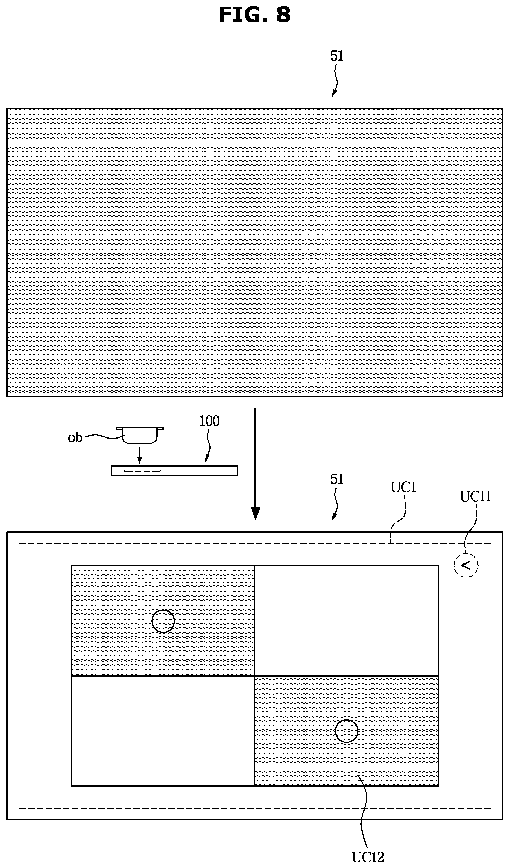

FIG. 8 illustrates an example of a screen displayed on the display 51, when the display 51 of the cooking apparatus 1 according to an embodiment is turned on by detection of a cooking container.

In an embodiment, the controller 80 may control the display 51 to display the first screen UC1 in response to a cooking container being detected by the first cooking device 100 while the display 51 is turned off. The controller 80 may control the display 51 to display the second screen UC2 in response to a cooking container being detected by the second cooking device 200 while the display 51 is turned off.

Referring to FIG. 8, the controller 80 may control the display 51 to display the first screen UC1 in response to detecting that the cooking container ob is placed on the cooking region 105 of the first cooking device 100 while the display 51 is turned off.

As another example, the controller 80 may control the display 51 to display the second screen UC2 in response to detecting that a cooking container is placed inside the cooking chamber 220 of the second cooking device 200 while the display 51 is turned off.

As still another example, the controller 80 may control the display 51 to display the second screen UC2 in response to detecting opening of the door 230 of the second cooking device 200 while the display 51 is turned off.

Meanwhile, according to various embodiments, in a case where the controller 80 turns on the display 51 in response to the detection condition being satisfied, the controller 80 may also control the display 51 to display the control screen UC as an initial screen.

The cooking apparatus 1 may display the control screen UC based on use history data (1100). In an embodiment, the initial screen may be the control screen UC including the first interface U1 and the second interface U2.

In an embodiment, the controller 80 may change at least one of the layout of the control screen UC or the content of the first interface U1 and the second interface U2 based on the use history data of the first cooking device 100 and the second cooking device 200.

For example, the controller 80 may identify a target cooking device having a higher likelihood of use at a current time from among the first cooking device 100 and the second cooking device 200 based on the use history data.

The controller 80 may identify a target cooking device having a higher likelihood of use at the time when the turn-on condition is satisfied, that is, at the current time, based on the use history data.

As described above, the use history data may be classified according to date, day of the week, and/or time, and may be stored.

For example, in a case where there is use history data indicating that the user used the second cooking device 200 on Tuesday morning (e.g., 8:00 AM) and the current time corresponds to the Tuesday morning, the controller 80 may identify the second cooking device 200 as the target cooking device having a higher likelihood of use at the current time.

As another example, in a case where there is use history data indicating that the user used the first cooking device 100 on Monday morning (e.g., 8:00 AM) and the current time corresponds to the Monday morning, the controller 80 may identify the first cooking device 100 as the target cooking device having a higher likelihood of use at the current time.

The target cooking device may be determined based on statistical probability.

For example, in a case where the number of times the user used the first cooking device 100 on Wednesday evening (e.g., 8:00 PM) is greater than the number of times the user used the second cooking device 200 and the current time corresponds to the Wednesday evening, the controller 80 may identify the first cooking device 100 as the target cooking device having a higher likelihood of use at the current time.

In determining the target cooking device, a weight may be assigned to recent use history.

For example, in a case where the number of times the user used the first cooking device 100 on Thursday evening (e.g., 8:00 PM) is greater than the number of times the user used the second cooking device 200, but the number of uses of the second cooking device 200 during a recent predetermined period is greater than the number of uses of the first cooking device 100, and the current time corresponds to the Wednesday evening, the controller 80 may identify the second cooking device 200 as the target cooking device having a higher likelihood of use at the current time.

The target cooking device may be determined by a trained artificial intelligence (AI) model.

The trained AI model may be trained to identify a target cooking device using use history data as input data.

In an embodiment, the AI model may be stored in the memory of the cooking apparatus 1. The AI model stored in the memory of the cooking apparatus 1 may be trained to identify a target cooking device by using use history data, obtained by the cooking apparatus 1, as input data.

In a case where the AI model is stored in the memory of the cooking apparatus 1, the controller 80 may identify a target cooking device by inputting use history data into the AI model stored in the memory.

In an embodiment, the AI model may be stored in an external device (e.g., a server). The cooking apparatus 1 may transmit use history data to the external device via the communication interface 60, and the external device may train the AI model based on the use history data received from the cooking apparatus 1.

In a case where the AI model is stored in an external device, the controller 80 may control the communication interface 60 to transmit use history data to the external device, and may receive, from the external device, information about the target cooking device identified using the AI model.

In a case where sufficient use history data is not stored to identify a target cooking device, the controller 80 may regard (determine) a preset default cooking device as the target cooking device.

The preset default cooking device may be preset during a manufacturing process of the cooking apparatus 1 or may be set according to a user's selection.

The controller 80 may change the layout of the control screen UC depending on the target cooking device.

Changing the layout of the control screen UC may include changing the arrangement of interfaces displayed on the control screen UC and/or displaying a pop-up window on the control screen UC.

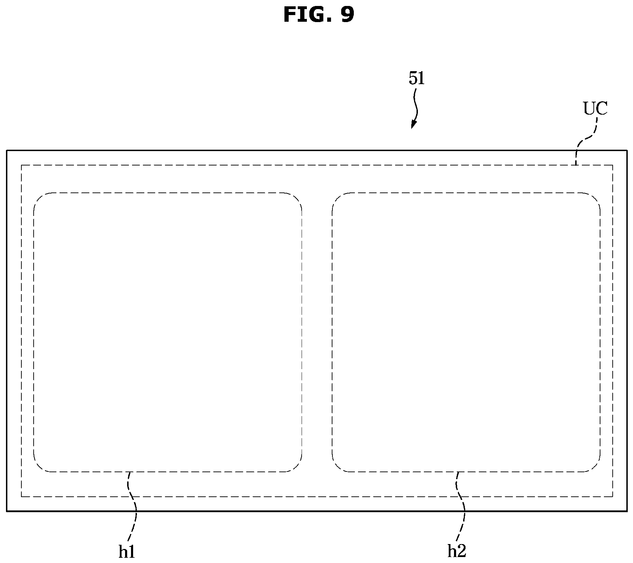

FIG. 9 illustrates an example of regions according to priority in the control screen UC displayed on the display of the cooking apparatus according to an embodiment.

Referring to FIG. 9, the control screen UC provided by the display 51 may be divided into a first region h1 and a second region h2.

The controller 80 may change the layout of the control screen UC to allow an interface associated with a cooking device identified as the target cooking device to be displayed in a region having a higher priority on the control screen UC.

A region that is more convenient for user operation from among the first region h1 and the second region h2 may be preset as a region having a higher priority.

The region having a higher priority may be preset during a manufacturing process of the cooking apparatus 1 or may be set according to a user's selection.

In an embodiment, the first region h1 on the left side of the control screen UC may be preset to have a higher priority than the second region h2 on the right side of the control screen UC.

In response to the first cooking device 100 being identified as the target cooking device having a higher likelihood of use at the current time, the controller 80 may change the layout of the control screen UC so that the first interface U1 is disposed in the first region h1 having a higher priority on the control screen UC and the second interface U2 is disposed in the second region h2 having a lower priority on the control screen UC.

In response to the second cooking device 200 being identified as the target cooking device having a higher likelihood of use at the current time, the controller 80 may change the layout of the control screen UC so that the second interface U2 is disposed in the first region h1 having a higher priority on the control screen UC and the first interface U1 is disposed in the second region h2 having a lower priority on the control screen UC.

According to the disclosure, by displaying an interface having a higher likelihood of user operation in a region having a higher priority according to the user's use history of the cooking apparatus 1, user operation convenience may be improved.

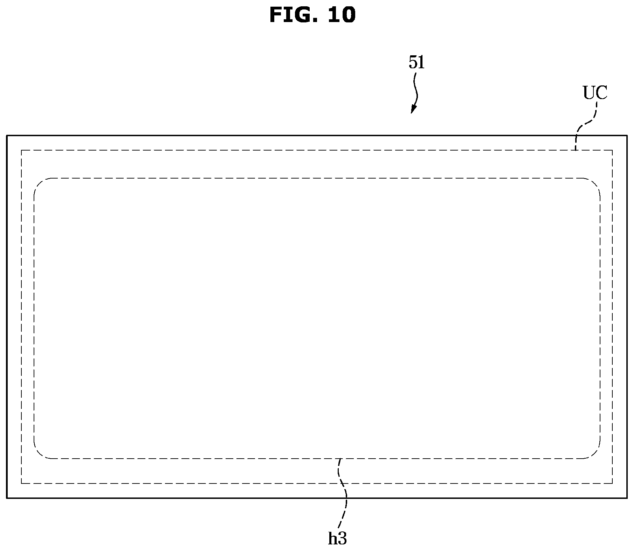

FIG. 10 illustrates an example in which only one interface is shown on a control screen displayed on the display of the cooking device according to an embodiment.

Referring to FIG. 10, the control screen UC provided by the display 51 may also include only one region h3 that may include only one interface.

The controller 80 may change the layout of the control screen UC to allow only an interface associated with a cooking device identified as a target cooking device to be displayed.

The controller 80 may change the layout of the control screen UC so that the control screen UC includes only the first interface U1 from among the first interface U1 and the second interface U2 in response to the first cooking device 100 being identified as the target cooking device.

That is, the controller 80 may change the layout of the control screen UC so that the first interface U1 is included in the single region h3 of the control screen UC in response to the first cooking device 100 being identified as the target cooking device.

The controller 80 may change the layout of the control screen UC so that the control screen UC includes only the second interface U2 from among the first interface U1 and the second interface U2 in response to the second cooking device 200 being identified as the target cooking device.

That is, the controller 80 may change the layout of the control screen UC so that the second interface U2 is included in the single region h3 of the control screen UC in response to the second cooking device 200 being identified as the target cooking device.

According to the disclosure, by displaying only an interface having a higher likelihood of user operation according to the user's use history of the cooking apparatus 1, user operation convenience may be improved.

**In** an embodiment, the controller 80 may also control the display 51 to display a pop-up window including an interface associated with a cooking device identified as a target cooking device.

The controller 80 may control the display 51 to display a pop-up window associated with the first interface U1 in response to the first cooking device 100 being identified as the target cooking device.

The controller 80 may control the display 51 to display a pop-up window associated with the second interface U2 in response to the second cooking device 200 being identified as the target cooking device.

According to the disclosure, by displaying an interface having a higher likelihood of user operation as a pop-up window according to the user's use history of the cooking apparatus 1, user operation convenience may be improved.

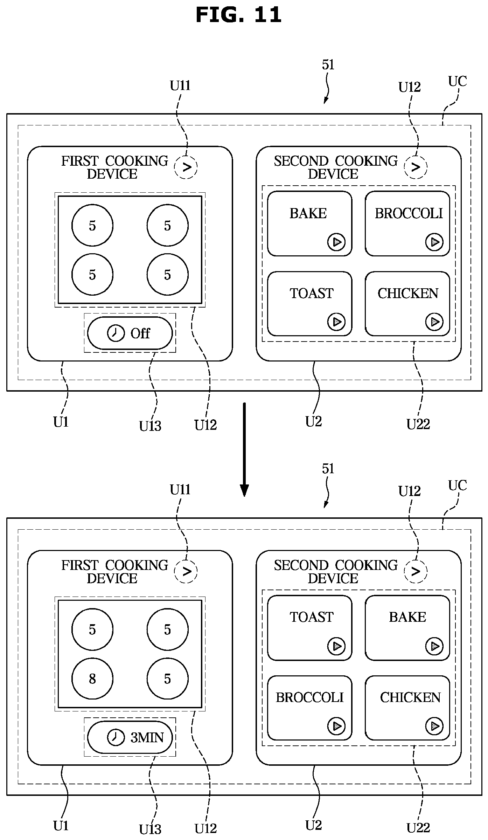

FIG. 11 illustrates an example of interface content change on a control screen displayed on the display of the cooking apparatus according to an embodiment.

Referring to FIG. 11, the first interface U1 and the second interface U2 may each include content (e.g., at least one interface element).

For example, the first interface U1 may include the first control interface U12, and the first control interface U12 may include an interface element for changing cooking settings for each of the plurality of cooking regions 105. The interface element U13 for setting a timer may also correspond to an interface element for changing cooking settings.

The interface element for changing cooking settings for each of the plurality of cooking regions 105 may have a preset initial cooking setting value.

When a user selects an interface element for changing cooking settings, a cooking setting value may be changed according to a user operation from the preset initial cooking setting value (e.g., heating intensity value, timer value).

In a case where the initial cooking setting value is preset to a user-desired cooking setting value, the user may change cooking settings for each of the plurality of cooking regions 105 to the user-desired cooking setting value with fewer operations.

The interface element for changing cooking settings may include a visual indicator indicating an initial cooking setting value.

A user may check the visual indicator to confirm the initial cooking setting value of the corresponding cooking region.

In an embodiment, the controller 80 may identify a cooking setting having a higher likelihood of use at the current time of the first cooking device 100 based on use history data, and may change the content of the first interface U1 to allow the first interface U1 to include an interface element for selecting the cooking setting.

For example, in a case where there is use history data indicating that the user used a lower left cooking region of the first cooking device 100 at 8 levels of heating intensity for 3 minutes on Monday morning (e.g., 8:00 AM), and the current time corresponds to the Monday morning, the controller 80 may determine, as 8 levels, an initial cooking setting value corresponding to an interface element corresponding to the lower left cooking region among interface elements of the first control interface U12.

That is, in a case where there is use history data indicating that the user used the lower left cooking region of the first cooking device 100 at 8 levels of heating intensity for 3 minutes on Monday morning (e.g., 8:00 AM), and the current time corresponds to the Monday morning, the controller 80 may change the content of the first interface U1 by changing a visual indicator corresponding to the interface element corresponding to the lower left cooking region among the interface elements of the first control interface U12.

In a case where there is use history data indicating that the user used the lower left cooking region of the first cooking device 100 at 8 levels of heating intensity for 3 minutes on Monday morning (e.g., 8:00 AM), and the current time corresponds to the Monday morning, the controller 80 may determine, as 3 minutes, an initial cooking setting value corresponding to the interface element U13 for setting the timer.

That is, in a case where there is use history data indicating that the user used the lower left cooking region of the first cooking device 100 at 8 levels of heating intensity for 3 minutes on Monday morning (e.g., 8:00 AM), and the current time corresponds to the Monday morning, the controller 80 may change the content of the first interface U1 by changing a visual indicator corresponding to the interface element U13 for setting the timer.

The second interface U2 may include the second control interface U22, and the second control interface U22 may include at least one interface element for selecting a dish to be cooked.

The at least one interface element for selecting a dish (or recipe) to be cooked may include a visual indicator indicating the dish (or recipe) to be cooked.

A user may operate the second cooking device 200 by checking the visual indicator and selecting a desired dish or recipe.

In an embodiment, the controller 80 may identify a cooking setting (e.g., a dish or recipe to be cooked) having a higher likelihood of use at the current time of the second cooking device 200 based on use history data, and may change the content of the second interface U2 to allow the second interface U2 to include an interface element for selecting the cooking setting (e.g., a dish or recipe to be cooked) having a higher likelihood of use at the current time.

For example, in a case where there is use history data indicating that the user used the second cooking device 200 to cook toast on Tuesday morning (e.g., 8:00 AM), and the current time corresponds to the Tuesday morning, the controller 80 may change the content of the second interface U2 to allow the second interface U2 to include an interface element for selecting toast as a dish or recipe.

In an embodiment, the controller 80 may identify a cooking setting (e.g., a dish or recipe to be cooked) having a higher likelihood of use at the current time of the second cooking device 200 based on use history data, and may change the layout of the second control interface U22 so that an interface element for selecting the cooking setting having a higher likelihood of use at the current time is disposed in a region having a higher priority.

For example, in a case where there is use history data indicating that the user used the second cooking device 200 to cook toast on Tuesday morning (e.g., 8:00 AM), and the current time corresponds to the Tuesday morning, the controller 80 may change the layout of the second control interface U22 so that the interface element for selecting toast as a dish or recipe is disposed at the upper left.

The cooking setting having a higher likelihood of use at the current time may be determined based on statistical probability in a manner similar to the process of identifying a target cooking device.

In identifying a cooking setting having a higher likelihood of use at the current time, a weight may be assigned to recent use history, in a manner similar to the process of identifying a target cooking device.

The cooking setting having a higher likelihood of use at the current time may be determined by a trained AI model, in a manner similar to the process of identifying a target cooking device.

The trained AI model may be trained to identify a cooking setting having a higher likelihood of use at the current time using use history data as input data.

According to the disclosure, the content of the interface may be changed so as to include content having a higher likelihood of being selected by a user based on the user's use history of the cooking apparatus 1, thereby improving user experience.

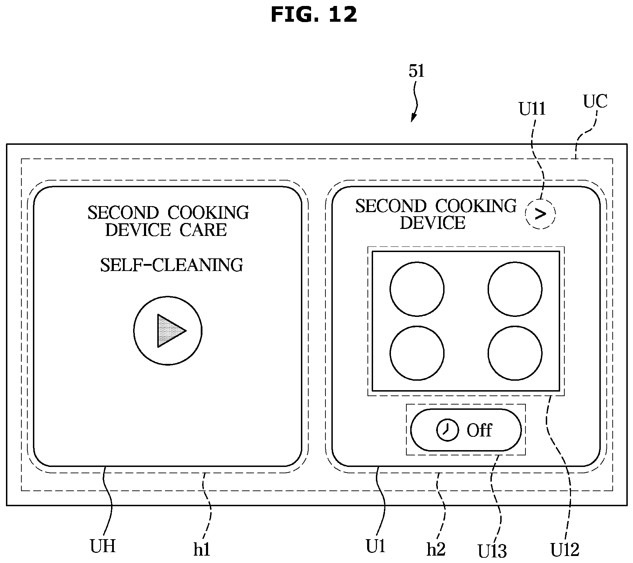

FIG. 12 illustrates an example of a layout change of a control screen in the event of a high-priority event, in the control screen displayed on the display of the cooking apparatus according to an embodiment.

Referring to FIG. 12, when a high-priority event occurs, the cooking apparatus 1 may change the layout of the control screen UC to include an interface associated with the event.

The high-priority event is a predetermined event, and may be preset during a manufacturing process of the cooking apparatus 1 or may be set according to a user's selection.

For example, the high-priority event may be a self-check event of the cooking devices 100 and 200 and/or a self-maintenance event of the cooking devices 100 and 200.

The self-check event of the cooking device includes detection of a failure of a specific component by the cooking device.

In response to detection of a failure of a specific component by the cooking device, the controller 80 may change the layout of the control screen UC so that the control screen UC includes a guide interface for guiding the failure of the component.

For example, in response to detection of a failure of the heating element 126 corresponding to any one of the cooking regions 105 by the first cooking device 100, the controller 80 may change the layout of the control screen UC so that the control screen UC includes a guide interface for guiding the failed heating element 126.

In this instance, the guide interface for guiding the high-priority event may be disposed in a region having a higher priority on the control screen UC, or may be provided as a pop-up window.

The self-maintenance event of the cooking apparatus includes satisfying a condition for performing a clean operation by the cooking devices 100 and 200. Satisfying the condition for performing a clean operation may include the cooking devices 100 and 200 being operated a predetermined number of times, the cooking devices 100 and 200 being operated for a predetermined period of time, and/or a predetermined period of time having elapsed without performing a clean operation on the cooking devices 100 and 200.

In response to the condition for performing a clean operation on the cooking devices 100 and 200 being satisfied, the controller 80 may change the layout of the control screen UC so that the control screen UC includes a guide interface for guiding a clean operation.

For example, in response to the condition for performing a clean operation on the second cooking device 200 being satisfied, the controller 80 may change the layout of the control screen UC so that the control screen UC includes a guide interface UH for guiding a clean operation.

The guide interface UH for guiding a clean operation may include an interface element for immediately starting the clean operation.

In this instance, the guide interface for guiding the high-priority event may be disposed in a region having a higher priority on the control screen UC, or may be provided as a pop-up window.

According to the disclosure, when check or maintenance of a cooking device is required, a guide interface is displayed with a higher priority on the control screen UC, thereby prompting a user to recognize that check or maintenance of the cooking device is required and to immediately take appropriate action.

Referring again to FIG. 7, the cooking apparatus 1 may control a screen according to a user input (1200).

The controller 80 may perform an operation corresponding to the selected interface elements in response to the selection of the interface elements included in the control screen UC.

For example, the controller 80 may switch the control screen UC to the first screen UC1 in response to the selection of the interface element U11 for switching to the first screen UC1, or may switch the control screen UC to the second screen UC2 in response to the selection of the interface element U21 for switching to the second screen UC2.

As another example, the controller 80 may control the first cooking device 100 according to a user input which is input via the first control interface U12, or may control the second cooking device 200 according to a user input which is input via the second control interface U22.

As still another example, the controller 80 may control the first cooking device 100 according to a user input which is input via the first screen UC1, or may control the second cooking device 200 according to a user input which is input via the second screen UC2.

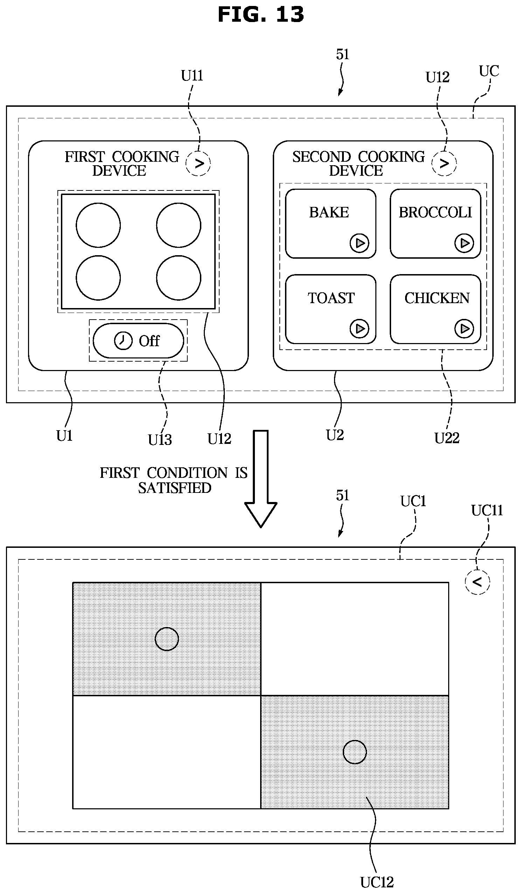

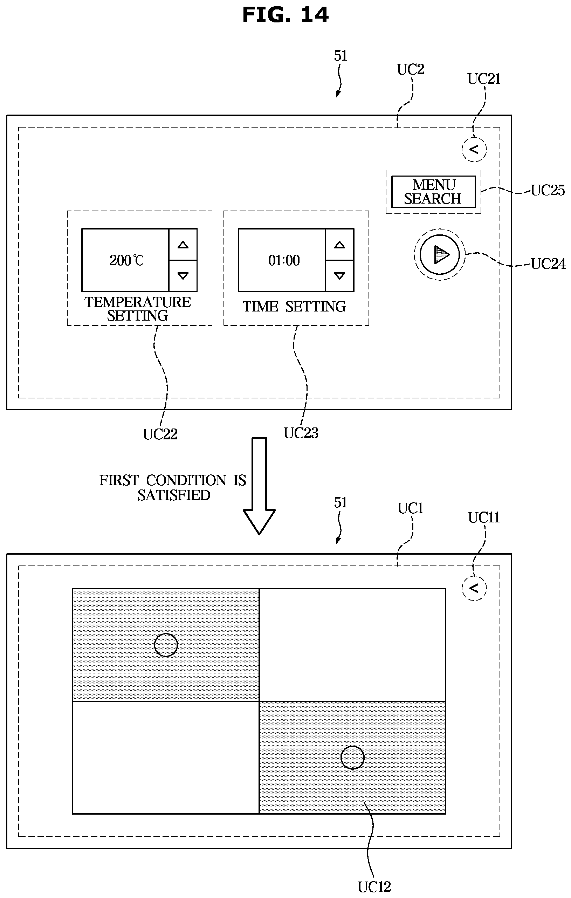

FIG. 13 and FIG. 14 illustrate an example in which a screen displayed on the display of the cooking apparatus is automatically switched to a first screen according to an embodiment.

The cooking apparatus 1 may switch a screen displayed by the display 51 to the first screen UC1 (1215), in response to a first condition being satisfied (Yes in operation 1210) while the display 51 is turned on.

The controller 80 may automatically switch the screen displayed by the display 51 to the first screen UC1 regardless of user input (1215), in response to the first condition being satisfied (Yes in operation 1210) while the display 51 displays a screen other than the first screen UC1.

Referring to FIG. 13, the controller 80 may automatically switch the screen displayed by the display 51 to the first screen UC1 regardless of user input (1215), in response to the first condition being satisfied (Yes in operation 1210) while the display 51 displays the control screen UC.

Referring to FIG. 14, the controller 80 may automatically switch the screen displayed by the display 51 to the first screen UC1 regardless of user input (1215), in response to the first condition being satisfied (Yes in operation 1210) while the display 51 displays the second screen UC2.

Here, satisfaction of the first condition may include occurrence of an event indicating that a user is highly likely to use the first cooking device 100 and/or occurrence of an event indicating that the first cooking device 100 is required to be used.

For example, satisfaction of the first condition may include detection of a cooking container by the first cooking device 100.

The controller 80 may control the display 51 to switch a screen other than the first screen UC1 to the first screen UC1, in response to detecting that a cooking container is placed on the first cooking device 100 through the sensor portion 70 while the screen other than the first screen UC1 is displayed.

As another example, satisfaction of the first condition may include cooking based on a recipe received from an external device via the communication interface 60 using the first cooking device 100.

The controller 80 may control the display 51 to switch a screen other than the first screen UC1 to the first screen UC1, in response to receiving a recipe that uses the first cooking device 100 from an external device via the communication interface 60 while the screen other than the first screen UC1 is displayed.

As still another example, satisfaction of the first condition may include cooking corresponding to a cooking stage of a recipe received from an external device via the communication interface 60 using the first cooking device 100.

In a case where the recipe includes a first cooking stage using the second cooking device 200 and a second cooking stage using the first cooking device 100, the controller 80 may control the display 51 to switch a screen other than the first screen UC1 to the first screen UC1, in response to completion of the first cooking stage using the second cooking device 200 while the screen other than the first screen UC1 is displayed.

As yet another example, satisfaction of the first condition may include completion of a timer of the first cooking device 100.

The controller 80 may control the display 51 to switch a screen other than the first screen UC1 to the first screen UC1, in response to completion of the timer of the first cooking device 100 while the screen other than the first screen UC1 is displayed.

As a further example, satisfaction of the first condition may include temperature information of an ingredient received from a temperature probe via the communication interface 60 satisfying a predetermined condition. Here, the temperature information of the ingredient may include a temperature value of the ingredient cooked by the first cooking device 100.

The controller 80 may control the display 51 to switch a screen other than the first screen UC1 to the first screen UC1, in response to the temperature of the ingredient received from the temperature probe reaching a predetermined temperature while the screen other than the first screen UC1 is displayed.

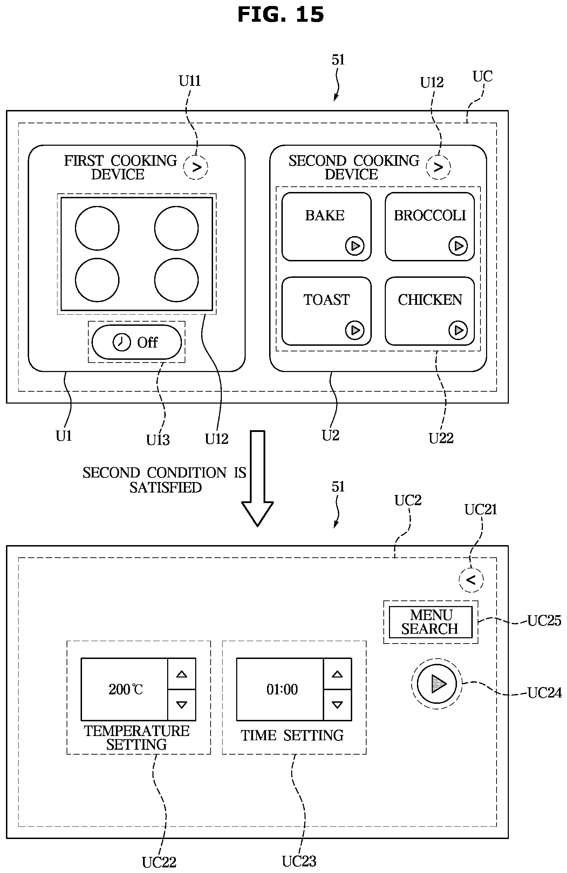

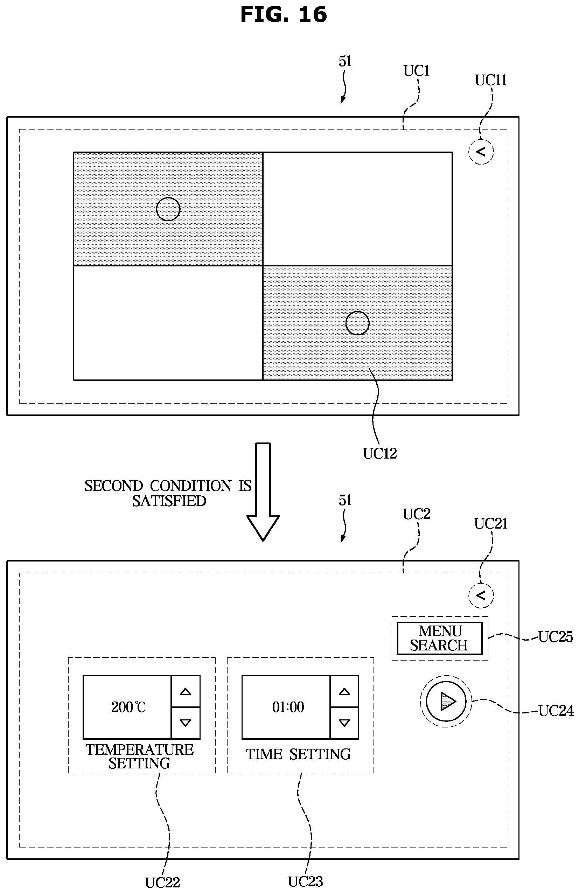

FIG. 15 and FIG. 16 illustrate an example in which a screen displayed on the display of the cooking apparatus is automatically switched to a second screen according to an embodiment.

Referring to FIG. 15 and FIG. 16, the cooking apparatus 1 may switch a screen displayed by the display 51 to the second screen UC2 (1225), in response to a second condition being satisfied (Yes in operation 1220) while the display 51 is turned on.

The controller 80 may automatically switch the screen displayed by the display 51 to the second screen UC2 regardless of user input (1225), in response to the second condition being satisfied (Yes in operation 1220) while the display 51 is turned on.

Referring to FIG. 15, the controller 80 may automatically switch the screen displayed by the display 51 to the second screen UC2 regardless of user input (1225), in response to the second condition being satisfied (Yes in operation 1220) while the display 51 displays the control screen UC.

Referring to FIG. 16, the controller 80 may automatically switch the screen displayed by the display 51 to the second screen UC2 regardless of user input (1225), in response to the second condition being satisfied (Yes in operation 1220) while the display 51 displays the first screen UC1.

Here, satisfaction of the second condition includes occurrence of an event indicating that a user is highly likely to use the second cooking device 200 and/or occurrence of an event indicating that the second cooking device 200 is required to be used.

For example, satisfaction of the second condition may include detection of a cooking container by the second cooking device 200.

The controller 80 may control the display 51 to switch a screen other than the second screen UC2 to the second screen UC2, in response to detecting a cooking container in the cooking chamber 220 of the second cooking device 200 through the sensor portion 70 while the screen other than the second screen UC2 is displayed.

As another example, satisfaction of the second condition may include cooking based on a recipe received from an external device via the communication interface 60 using the second cooking device 200.

The controller 80 may control the display 51 to switch a screen other than the second screen UC2 to the second screen UC2, in response to receiving a recipe that uses the second cooking device 200 from an external device via the communication interface 60 while the screen other than the second screen UC2 is displayed.

As still another example, satisfaction of the second condition may include cooking corresponding to a cooking stage of a recipe received from an external device via the communication interface 60 using the second cooking device 200.

In a case where the recipe includes a first cooking stage using the first cooking device 100 and a second cooking stage using the second cooking device 200, the controller 80 may control the display 51 to switch a screen other than the second screen UC2 to the second screen UC2, in response to completion of the first cooking stage using the first cooking device 100 while the screen other than the second screen UC2 is displayed.

As yet another example, satisfaction of the second condition may include completion of a timer of the second cooking device 200.

The controller 80 may control the display 51 to switch a screen other than the second screen UC2 to the second screen UC2, in response to completion of the timer of the second cooking device 200 while the screen other than the second screen UC2 is displayed.

As a further example, satisfaction of the second condition may include temperature information of an ingredient received from a temperature probe via the communication interface 60 satisfying a predetermined condition. Here, the temperature information of the ingredient may include a temperature value of the ingredient cooked by the second cooking device 200.

The controller 80 may control the display 51 to switch a screen other than the second screen UC2 to the second screen UC2, in response to the temperature of the ingredient received from the temperature probe reaching a predetermined temperature while the screen other than the second screen UC2 is displayed.

As a further example, satisfaction of the second condition may include detection of opening or closing of the door 230 through the sensor portion 70.

The controller 80 may control the display 51 to switch a screen other than the second screen UC2 to the second screen UC2, in response to detecting opening or closing of the door 230 while the screen other than the second screen UC2 is displayed.

According to the disclosure, a screen displayed by the display 51 may be automatically switched to a screen required at the current time without user intervention, thereby improving user convenience.

According to various embodiments, the controller 80 may switch a screen displayed by the display 51 based on processing a voice input received through a microphone of the user interface device 50.

For example, in a case where a control command corresponding to a voice input received through the microphone of the user interface device 50 is associated with the first cooking device 100, the controller 80 may switch a screen displayed by the display 51 to the first screen UC1.

As another example, in a case where a control command corresponding to a voice input received through the microphone of the user interface device 50 is associated with the second cooking device 200, the controller 80 may switch a screen displayed by the display 51 to the second screen UC2.

According to the disclosure, a user may easily switch a screen through a voice command.

According to various embodiments, when automatically switching a screen displayed by the display 51, the cooking apparatus 1 may output a visual notification indicating that the screen is about to be switched through the display 51 before the screen is switched. In an embodiment, the cooking apparatus 1 may switch a screen when a predetermined period of time has elapsed after outputting the visual notification indicating that the screen is about to be switched through the display 51. The visual notification may be in the form of a pop-up, but the form of the visual notification is not limited thereto.

As another example, when automatically switching a screen displayed by the display 51, the cooking apparatus 1 may output a visual notification indicating that the screen has been switched through the display 51 after the screen is switched.

Automatically switching a screen displayed by the display 51 may include an operation (1215) of automatically switching a screen displayed by the display 51 to the first screen UC1 regardless of user input, and/or an operation (1225) of automatically switching a screen displayed by the display 51 to the second screen UC2 regardless of user input.

In an embodiment, when a visual notification indicating that a screen is about to be switched is output before switching the screen, the visual notification may include an interface element for confirming (inquiring) whether to switch the screen.

A user may allow or reject screen switching through the interface element for confirming whether to switch the screen.

The controller 80 may output the visual notification indicating that a screen is about to be switched through the display 51 before the screen is switched, and may switch the screen displayed by the display 51 in response to receiving a positive response through the interface element for confirming whether to switch the screen. The controller 80 may output the visual notification indicating that a screen is about to be switched through the display 51 before the screen is switched, and may not switch the screen displayed by the display 51 in response to receiving a negative response through the interface element for confirming whether to switch the screen.

A user may make various settings related to a function (hereinafter, referred to as 'switching function') of automatically switching a screen displayed by the display 51 regardless of user input.

For example, the cooking apparatus 1 may provide an interface for turning on or off the switching function. The cooking apparatus 1 may automatically switch a screen displayed by the display 51 regardless of user input, in response to a predetermined condition being satisfied only when the switching function is turned on.

In contrast, the cooking apparatus 1 may not automatically switch a screen displayed by the display 51 regardless of user input when the switching function is turned off.

As another example, the cooking apparatus 1 may turn on or off a function (hereinafter, referred to as 'visual notification output function') of outputting a visual notification when a screen displayed by the display 51 is automatically switched regardless of user input. The cooking apparatus 1 may output the visual notification during automatic switching of a screen displayed by the display 51, only when the visual notification output function is turned on.

In contrast, the cooking apparatus 1 may not output the visual notification during automatic switching of a screen displayed by the display 51, while the visual notification output function is turned off.

As still another example, in relation to the visual notification output function, the cooking apparatus 1 may provide a first setting in which a visual notification includes an interface element for confirming whether to switch a screen, and a second setting in which the visual notification does not include the interface element for confirming whether to switch a screen. Only when the first setting is selected, the cooking apparatus 1 may output the visual notification including the interface element for confirming whether to switch a screen during automatic switching of a screen displayed by the display 51. In a case where the visual notification includes the interface element for confirming whether to switch a screen, the cooking apparatus 1 may not switch a screen without a user's positive response.

In contrast, in a case where the second setting is selected, the cooking apparatus 1 may output a visual notification that does not include the interface element for confirming whether to switch a screen during automatic switching of a screen displayed by the display 51. In this case, the cooking apparatus 1 may automatically switch a screen in response to a predetermined period of time having elapsed after the visual notification is output.

According to the disclosure, a plurality of options related to the automatic screen switching function may be provided based on user requirements, thereby improving user convenience.

According to an embodiment of the disclosure, a cooking apparatus 1 may include: a first cooking device 100; a second cooking device 200; a display 51 configured to display a control screen UC including a first interface U1 associated with the first cooking device 100 and a second interface U2 associated with the second cooking device 200; and a controller 80 configured to change at least one of a layout of the control screen UC or content of the first interface U1 and the second interface U2 based on use history data of the first cooking device 100 and the second cooking device 200.

The controller 80 may be configured to identify a target cooking device having a higher likelihood of use at a current time from among the first cooking device 100 and the second cooking device 200 based on the use history data.

In response to the first cooking device 100 being identified as the target cooking device, the controller 80 may be configured to change the layout of the control screen UC to allow the first interface U1 to be disposed in a first region having a higher priority on the control screen UC and the second interface U2 to be disposed in a second region having a lower priority on the control screen UC.

In response to the first cooking device 100 being identified as the target cooking device, the controller 80 may be configured to change the layout of the control screen UC to allow the control screen UC to include only the first interface U1 from among the first interface U1 and the second interface U2.

In response to the first cooking device 100 being identified as the target cooking device, the controller 80 may be configured to control the display 51 to display a pop-up window associated with the first interface U1.

The controller 80 may be configured to identify a cooking setting of the first cooking device 100 having a higher likelihood of use at a current time based on the use history data.

The controller 80 may be configured to change the content of the first interface U1 to allow the first interface U1 to include an interface element for selecting the cooking setting.

The controller 80 may be configured to control the display 51 to display the control screen UC as an initial screen, in response to a turn-on condition of the display 51 being satisfied.

The turn-on condition of the display 51 may include a presence condition including at least one of a power button being selected, the display 51 being touched, or a user's approach being detected, and a detection condition including a cooking container being detected by the first cooking device 100 or the second cooking device 200.

In response to the presence condition being satisfied, the controller 80 may be configured to control the display 51 to display the control screen UC as the initial screen.

In response to the detection condition being satisfied, the controller 80 may be configured to control the display 51 to display, as the initial screen, a screen associated with control of a cooking device that detects the cooking container from among the first cooking device 100 and the second cooking device 200.

The first interface U1 may include a first interface element for switching the control screen UC to a first screen UC1 associated with control of the first cooking device 100.

The second interface U2 may include a second interface element for switching the control screen UC to a second screen UC2 associated with control of the second cooking device 200.

The controller 80 may be configured to control the display 51 to switch the first screen UC1 to the second screen UC2, in response to detecting opening or closing of a door of the second cooking device 200 while the display 51 displays the first screen UC1.

The controller 80 may be configured to control the display 51 to switch the first screen UC1 to the second screen UC2, in response to a cooking container being detected by the second cooking device 200 while the display 51 displays the first screen UC1.

According to an embodiment of the disclosure, a method for controlling the cooking apparatus 1 may include: displaying a control screen UC including a first interface U1 associated with the first cooking device 100 and a second interface U2 associated with the second cooking device 200; and changing at least one of a layout of the control screen UC or content of the first interface U1 and the second interface U2 based on use history data of the first cooking device 100 and the second cooking device 200.

The changing of the layout of the control screen UC may include identifying a target cooking device having a higher likelihood of use at a current time from among the first cooking device 100 and the second cooking device 200 based on the use history data.

The changing of the layout of the control screen UC may include, in response to the first cooking device 100 being identified as the target cooking device, changing the layout of the control screen UC to allow the first interface U1 to be disposed in a first region having a higher priority on the control screen UC and the second interface U2 to be disposed in a second region having a lower priority on the control screen UC.

The changing of the layout of the control screen UC may include, in response to the first cooking device 100 being identified as the target cooking device, changing the layout of the control screen UC to allow the control screen UC to include only the first interface U1 from among the first interface U1 and the second interface U2.

The changing of the layout of the control screen UC may include, in response to the first cooking device 100 being identified as the target cooking device, displaying a pop-up window associated with the first interface U1.

The changing of the content of the first interface U1 and the second interface U2 may include identifying a cooking setting of the first cooking device 100 having a higher likelihood of use at a current time based on the use history data.

The changing of the content of the first interface U1 and the second interface U2 may include changing the content of the first interface U1 to allow the first interface U1 to include an interface element for selecting the cooking setting.

The method for controlling the cooking apparatus 1 may further include controlling the display 51 to display the control screen UC as an initial screen in response to a turn-on condition of the display 51 being satisfied.

The turn-on condition of the display 51 may include a presence condition including at least one of a power button being selected, the display 51 being touched, or a user's approach being detected, and a detection condition including a cooking container being detected by the first cooking device 100 or the second cooking device 200.

The method for controlling the cooking apparatus 1 may further include: in response to the presence condition being satisfied, controlling the display 51 to display the control screen UC as the initial screen; and in response to the detection condition being satisfied, controlling the display 51 to display, as the initial screen, a screen associated with control of a cooking device that detects the cooking container from among the first cooking device 100 and the second cooking device 200.

The first interface U1 may include a first interface element for switching the control screen UC to a first screen UC1 associated with control of the first cooking device 100.

The second interface U2 may include a second interface element for switching the control screen UC to a second screen UC2 associated with control of the second cooking device 200.

The method for controlling the cooking apparatus 1 may further include controlling the display 51 to switch the first screen UC1 to the second screen UC2, in response to detecting opening or closing of a door of the second cooking device 200 while the display 51 displays the first screen UC1.

The method for controlling the cooking apparatus 1 may further include controlling the display 51 to switch the first screen UC1 to the second screen UC2, in response to a cooking container being detected by the second cooking device 200 while the display 51 displays the first screen UC1.

Meanwhile, the disclosed embodiments may be implemented in the form of a recording medium that stores instructions executable by a computer. The instructions may be stored in the form of program codes, and when executed by a processor, the instructions may create a program module to perform operations of the disclosed embodiments. The recording medium may be implemented as a computer-readable recording medium.

The computer-readable recording medium may include all kinds of recording media storing instructions that can be interpreted by a computer. For example, the computer-readable recording medium may be read only memory (ROM), random access memory (RAM), a magnetic tape, a magnetic disc, a flash memory, an optical data storage device, etc.

Furthermore, the computer-readable recording medium may be provided in the form of a non-transitory storage medium. The term 'non-transitory storage medium' may refer to a tangible device without including a signal (e.g., electromagnetic waves) and may not distinguish between storing data in the storage medium semi-permanently and temporarily. For example, the non-transitory storage medium may include a buffer that temporarily stores data.

The method according to the various embodiments disclosed herein may be provided in a computer program product. The computer program product may be traded between a seller and a buyer as a product. The computer program product may be distributed in the form of a machine-readable recording medium (e.g., compact disc read only memory (CD-ROM)), or may be distributed (e.g., download or upload) through an application store (e.g., Play Store^{™}) online or directly between two user devices (e.g., smartphones). In the case of online distribution, at least a portion of the computer program product (e.g., downloadable app) may be stored at least semi-permanently or may be temporarily generated in a recording medium, such as a memory of a server of a manufacturer, a server of an application store, or a relay server.

Although embodiments of the disclosure have been described with reference to the accompanying drawings, a person having ordinary skilled in the art will appreciate that other specific modifications may be easily made without departing from the technical spirit or essential features of the disclosure. Therefore, the foregoing embodiments should be regarded as illustrative rather than limiting in all aspects.

## Claims

1. A cooking apparatus, comprising:
a first cooking device;
a second cooking device;
a display configured to display a control screen including a first interface associated with the first cooking device and a second interface associated with the second cooking device; and
a controller configured to change at least one of a layout of the control screen or content of the first interface and the second interface based on use history data of the first cooking device and the second cooking device.

2. The cooking apparatus of claim 1, wherein the controller is configured to:
identify a target cooking device having a higher likelihood of use at a current time from among the first cooking device and the second cooking device based on the use history data; and
based on the first cooking device being identified as the target cooking device, change the layout of the control screen to position the first interface to be in a first region having a higher priority on the control screen and position the second interface to be in a second region having a lower priority on the control screen.

3. The cooking apparatus of claim 1, wherein the controller is configured to:
identify a target cooking device having a higher likelihood of use at a current time from among the first cooking device and the second cooking device based on the use history data; and
based on the first cooking device being identified as the target cooking device, change the layout of the control screen to allow the control screen to include only the first interface from among the first interface and the second interface.

4. The cooking apparatus of claim 1, wherein the controller is configured to:
identify a target cooking device having a higher likelihood of use at a current time from among the first cooking device and the second cooking device based on the use history data; and
based on the first cooking device being identified as the target cooking device, control the display to display a pop-up window associated with the first interface.

5. The cooking apparatus of claim 1, wherein the controller is configured to:
identify a cooking setting of the first cooking device having a higher likelihood of use at a current time based on the use history data; and
change the content of the first interface to allow the first interface to include an interface element for selecting the cooking setting.

6. The cooking apparatus of claim 1, wherein the controller is configured to control the display to display the control screen as an initial screen, based on a turn-on condition of the display being satisfied.

7. The cooking apparatus of claim 6, wherein the turn-on condition of the display includes a presence condition including at least one of a power button being selected, the display being touched, or a user's approach being detected, and a detection condition including a cooking container being detected by the first cooking device or the second cooking device, and
the controller is configured to:
based on the presence condition being satisfied, control the display to display the control screen as the initial screen, and
based on the detection condition being satisfied, control the display to display, as the initial screen, a screen associated with control of a cooking device that detects the cooking container from among the first cooking device and the second cooking device.

8. The cooking apparatus of claim 1, wherein the first interface includes a first interface element for switching the control screen to a first screen associated with control of the first cooking device, and
the second interface includes a second interface element for switching the control screen to a second screen associated with control of the second cooking device.

9. The cooking apparatus of claim 8, wherein the controller is configured to control the display to switch the first screen to the second screen, based on detecting opening or closing of a door of the second cooking device while the display displays the first screen.

10. The cooking apparatus of claim 8, wherein the controller is configured to control the display to switch the first screen to the second screen, based on a cooking container being detected by the second cooking device while the display displays the first screen.

11. A method for controlling a cooking apparatus comprising a first cooking device and a second cooking device, the method comprising:
displaying a control screen including a first interface associated with the first cooking device and a second interface associated with the second cooking device; and
changing at least one of a layout of the control screen or content of the first interface and the second interface based on use history data of the first cooking device and the second cooking device.

12. The method of claim 11, wherein the changing of the layout of the control screen comprises:
identifying a target cooking device having a higher likelihood of use at a current time from among the first cooking device and the second cooking device based on the use history data; and
based on the first cooking device being identified as the target cooking device, changing the layout of the control screen to position the first interface to be in a first region having a higher priority on the control screen and position the second interface to be in a second region having a lower priority on the control screen.

13. The method of claim 11, wherein the changing of the layout of the control screen comprises:
identifying a target cooking device having a higher likelihood of use at a current time from among the first cooking device and the second cooking device based on the use history data; and
based on the first cooking device being identified as the target cooking device, changing the layout of the control screen to allow the control screen to include only the first interface from among the first interface and the second interface.

14. The method of claim 11, wherein the changing of the layout of the control screen comprises:
identifying a target cooking device having a higher likelihood of use at a current time from among the first cooking device and the second cooking device based on the use history data; and
based on the first cooking device being identified as the target cooking device, displaying a pop-up window associated with the first interface.

15. The method of claim 11, wherein the changing of the content of the first interface and the second interface comprises:
identifying a cooking setting of the first cooking device having a higher likelihood of use at a current time based on the use history data; and
changing the content of the first interface to allow the first interface to include an interface element for selecting the cooking setting.
